# EUROPEAN PATENT APPLICATION

(11) **EP 0 603 918 A1**
(43) Date of publication of application: **29.06.1994**
(21) Application number: 93203219.6
(22) Date of filing: 17.11.1993
(51) Int. Cl.: B65F 1/08, B65F 1/00, F16B 5/06

(54) **Improvements in and relating to refuse containers**

(30) Priority: 23.12.1992 GB 9226870
(71) Applicant: T & D INDUSTRIES plc, Rotherham SJ1 4RJ (GB)
(72) Inventor: Hall, Ernest, Spotborough, Doncaster DN5 7SD (GB)
(74) Representative: Wharton, Peter Robert

(57) **Abstract**

A rigid liner (10) for insertion within a refuse container (20), the liner comprising a base (2), wall portions (4,5,6 & 7) and an open upper end and including at or close to said upper end fixing means (16, 18) to retain the liner within the refuse container.

## Description

The present invention relates to a rigid or semi-rigid liner for insertion within a refuse container, particularly though not exclusively a refuse container of the type commonly referred to as a "wheeled bin", and to a method of fixing the liner within the container. Such a container is typically engaged with lifting gear on the rear of a refuse collection vehicle, and, once engaged, the container is then automatically lifted and tipped to discharge the contents into the refuse collection vehicle.

The purpose of such a liner is to segregate different types of waste within a single container. For example, recyclable waste may be separated from non-recyclable waste. It is also important to ensure that the different types of waste stay segregated during tipping of the container.

According to a first aspect of the present invention there is provided a liner for insertion within a refuse container, the liner comprising a base, side wall portion and an open upper end and including at or close to said upper end fixing means to retain the liner within the refuse container.

The fixing means preferably comprise two elongate members extending outwardly from opposed side walls of the liner, each elongate member including resiliently deformable retaining means. Location holes are drilled or otherwise formed in the container itself, and the elongate members are pushed into these, the retaining means being initially deformed and then resuming their original shape to retain the elongate members in the holes.

Typically, the liner would be blow moulded in plastics material, each elongate member being integrally moulded with the liner and taking the form of a bayonet catch having a cylindrical stem portion and a conical, resiliently deformable head at its free end, the trailing edge of the conical head having a diameter slightly greater than that of the stem portion to retain the liner within the location holes in the container.

Preferably, the liner is made in a shape to correspond fairly closely to the interior shape of the container in the region where it is intended to fit, which would typically be at the side of the container which, when the container is engaged with a collection vehicle, is nearest to the vehicle's lifting gear. Because the containers within which the liner is intended to fit tend to be of a flared shaped with the top wider than the end, the liner itself also follows this general shape, the bayonet catches are preferably located off-centre, thus utilising the fulcrum effect to keep the liner in a horizontal orientation when the container is upright. This is achieved by offsetting the mould split line, thus allowing the catches to be positioned so as to maximise the aforesaid fulcrum effect. This also allows for differential thickness to be achieved in the liner, to give strength and performance in the right place.

According to a second aspect of the present invention there is provided a method of retaining a liner within a refuse container, the liner comprising a base, side wall portion and an open upper end, the method including providing at or close to said upper end fixing means to retain the liner within the refuse container.

According to a third aspect of the present invention there is provided a refuse container fitted with a liner having a base, sidewall portion and an open upper end, the liner having at or close to said upper end fixing means and the container having reception means for receiving said fixing means whereby the liner is retained within the container.

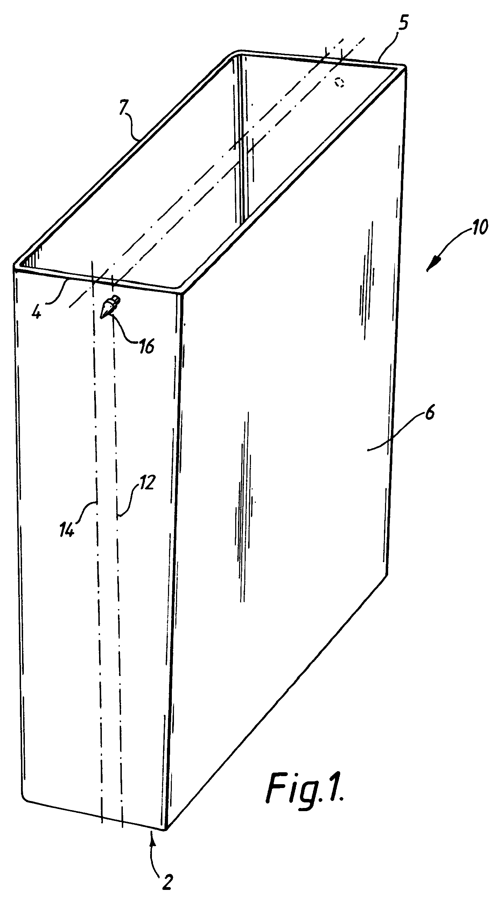

An embodiment of the present invention will now be described, by way of example only, with reference to the accompanying drawings, in which:-
Figure 1 illustrates the liner itself,

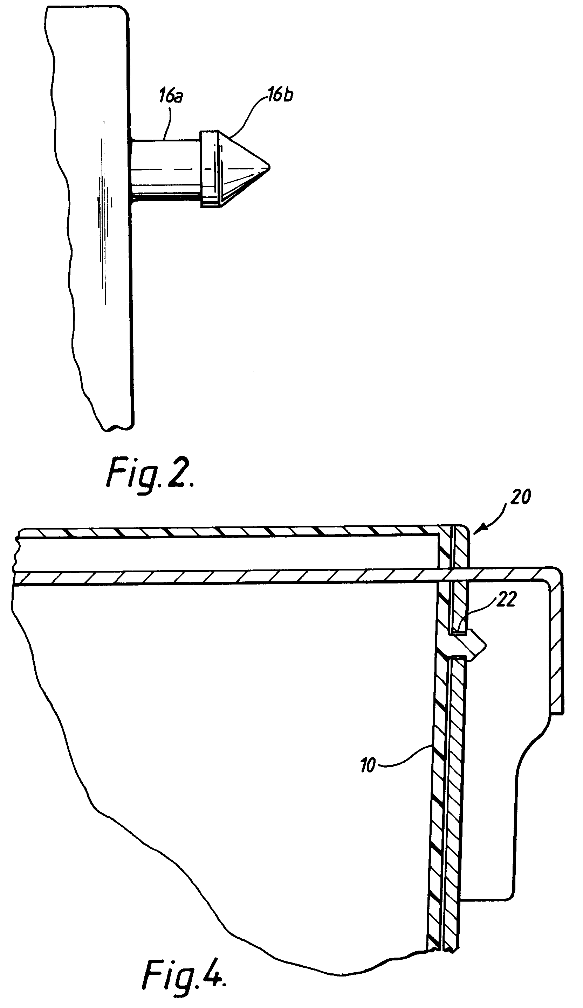

Figure 2 illustrates in more detail the bayonet catches on the liner,

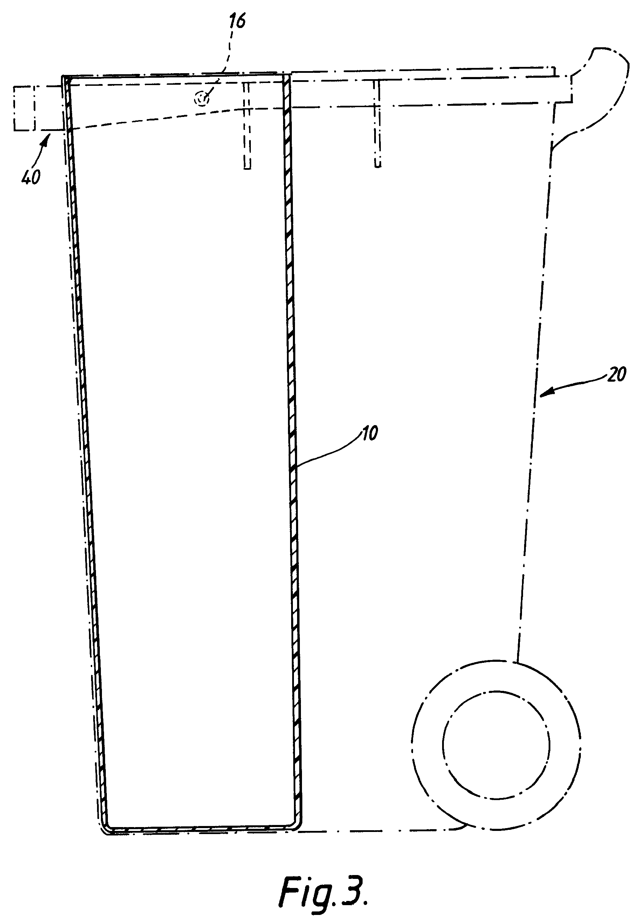

Figure 3 shows the position of the liner relative to the container,

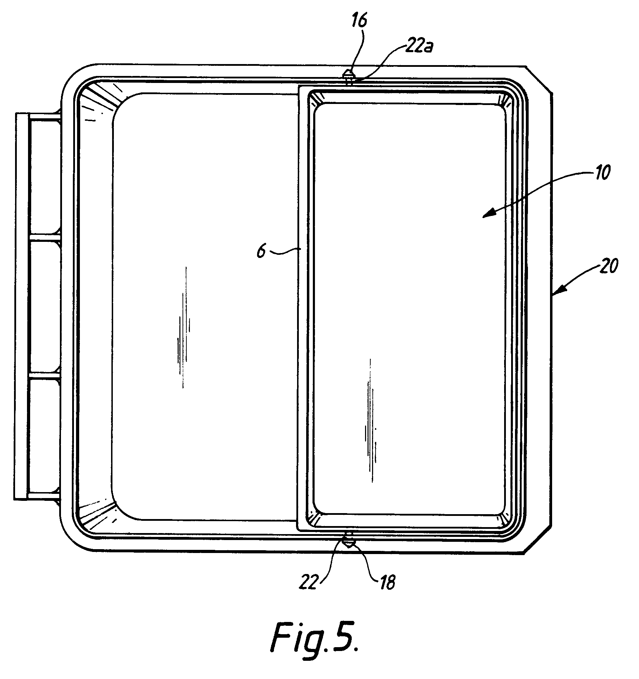

Figure 4 illustrates how the bayonet catches locate with holes in the container, and
Figure 5 is a top plan view of the container with the liner in place.

Referring to the drawings, a rigid liner 10 for a wheeled bin type of refuse container comprises a base 2, side walls 4, 5, front wall 7 and rear wall 6, and is open at its upper end.

The liner is shaped so as to fit inside a wheeled bin 20 at one side thereof, and is therefore flared outwardly from the base 2 towards the upper end.

The liner is preferably blow moulded of plastics material, utilising two mould halves meeting at a mould split line 12 which is offset from the centre line 14 of the moulding.

Two bayonet catches 16, 18 are integrally moulded and comprise a stem portion 16a, and a resiliently deformable conical head portion 16b. These catches are provided along the mould split line, close to the open upper end of the liner.

Two location holes 22a, 22b are drilled or formed in the bin 20, and to fit the liner 10 within the bin, the liner is lowered into the bin and flexed to allow the bayonet catches to locate in the holes. A sharp tap then locks the bayonet catches home.

Location of the bayonet catches and location holes off centre enables the liner to assume a substantially horizontal orientation when the bin is upright, and also allows parts of the liner to be thicker than others to give the required strength and performance. In particular, the rear wall 6 is thicker than the rest of the liner, where extra strength is required.

When the container having the liner fitted is required to be emptied, the lifting gear of the refuse collection vehicle engages the lifting bar 40 of the container, and the container is thus lifted and tipped to discharge the contents of both the liner and the container into the vehicle. Due to the shape and strength of the liner and the positioning of the retaining means the liner is held firmly in place within the container. Thus, as the container is tipped, the contents of the liner are discharged first, followed by the contents of the rest of the container, thereby keeping the segregated wastes separate during tipping.

## Claims

1. A liner 10 for insertion within a refuse container, the liner comprising a base (2), wall portions (4, 5, 6 & 7) and an open upper end characterised in the the liner includes at or close to said upper end fixing means (16, 18) to retain the liner within the refuse container.

2. A liner according to Claim 1 further characterised in that the fixing means comprises two elongate members (16, 18) extending outwardly from opposed side walls (of the liner, each elongate member including resiliently deformable retaining means (16b) for retaining the elongate members in location holes (22a, 22b) formed in the container.

3. A liner according to Claim 1 or Claim 2 further characterised in that the liner is blow moulded in plastics material, each elongate member being integrally moulded with the liner.

4. A liner according to any of the preceding Claims further characterised in that each elongate member takes the form of a bayonet catch having a cylindrical stem portion (16a) and a conical, resiliently deformable head (16b) at its free end, the trailing edge of the conical head having a diameter slightly greater than that of the stem portion to retain the liner within the location holes in the container.

5. A liner according to any of the preceding Claims further characterised in that it is made in a shape to substantially correspond to the interior shape of the container in the region where it is intended to fit.

6. A liner according to any of the preceding Claims further characterised in that it is made in a flared shaped with the top wider than the end and the elongate members are preferably located off-centre.

7. A method of retaining a liner (10) within a refuse container (20), the liner comprising a base (2), wall portions (4, 5, 6 & 7) and an open upper end, the method being characterised in that it includes providing at or close to said upper end fixing means (16, 18) to retain the liner within the refuse container.

8. A refuse container (20) fitted with a liner (10) having a base, wall portions (4, 5, 6 & 7) and an open upper end, characterised in that the liner (10) has at or close to said upper end fixing means (16, 18) and the container has reception means (22a, 22b) for receiving said fixing means whereby the liner is retained within the container.
